# EUROPEAN PATENT APPLICATION

(11) **EP 1 693 794 A1**
(43) Date of publication of application: **23.08.2006**
(21) Application number: 06075396.9
(22) Date of filing: 20.02.2006
(51) Int. Cl.: G06Q 20/00

(54) **Method for controlling a unit and for charging**

(30) Priority: 18.02.2005 NL 1028332
(71) Applicant: XSCall B.V., 2741 PE Waddinxveen (NL)
(72) Inventor: Van Berkel, Theodorus, 2715 SW Zoetemeer (NL)
(74) Representative: Verhees, Godefridus Josephus Maria

(57) **Abstract**

With a method for operating a unit 13 at a charge, for example, a unit that has been installed on a door 9 of a public toilet 5 and can open the lock on the door, the unit 13 is rung up through the existing GSM network 33 by a control unit 25, after a person wishing to use the toilet 5 has first rung the control unit 25 and given a code 35 specific to the toilet. To do this, this user rings the number of the control unit 25 by means of his mobile telephone 31 and gives the specific code 35. After the unit 13 has been rung by the control unit 25 it opens the lock of the door 9 and the caller can make use of the toilet 5. With this method, the telephone company automatically charges the caller an amount, which amount is paid afterwards to the owner of the toilet.

## Description

### BACKGROUND OF THE INVENTION:

### Field of the invention

The invention relates to a method for operating a unit at a charge.

### Prior art

Such a method is known from the US patent 6.584.309 and is applied to, among other things, soft drinks vending machines. With this well-known method, a customer can ring by means of a mobile telephone a specific telephone number (indicated on the vending machine), after which he receives a code which he must introduce into the vending machine, and after that the product desired is released. The telephone company or the sales organisation that manages the vending machines then sends a bill to the customer. The disadvantage of this well-known method is that the charging process is time-consuming.

### Summary of the invention

An objective of the invention is to improve the well-known method. To this end, the method according to the invention is characterised in that the request signal is received wirelessly through a specific pay number, by means of which the sender of the request signal is automatically charged an amount through a telephone company by means of the telephone bill or by transferring a prepaid telephone credit, which amount is paid to the owner of the unit, a wireless message is then sent to the sender asking him to give an identification code which is unique to the unit, the identification code sent by the sender is then received wirelessly, after which a control signal related to this identification code is sent wirelessly to the unit. With this system, payment takes place through the telephone bill or by transferring an amount from the prepaid telephone credit as a result of which no extra bill is necessary. The sender of the request signal is preferably automatically charged an amount through a telephone company. This can be done, for example, by making use of a 0900 telephone number for where the request signal is to be sent. A user can therefore make use of this system of payment without any supplemental subscription or agreement.

Preferably, receiving a request signal, sending a message and sending a control signal take place in accordance with the GSM standard and through the existing GSM network.

### Brief description of the drawings

The invention will be elucidated more fully below on the basis of drawings in which embodiments of the system according to the invention are shown. In these drawings:
Figure 1 shows a first embodiment of a system in which the method according to the invention is used for unlocking the door of a toilet; and
Figure 2 shows a second embodiment of a system in which the method according to the invention is applied to a snack and soft drinks vending machine.

### Detailed description of the drawings

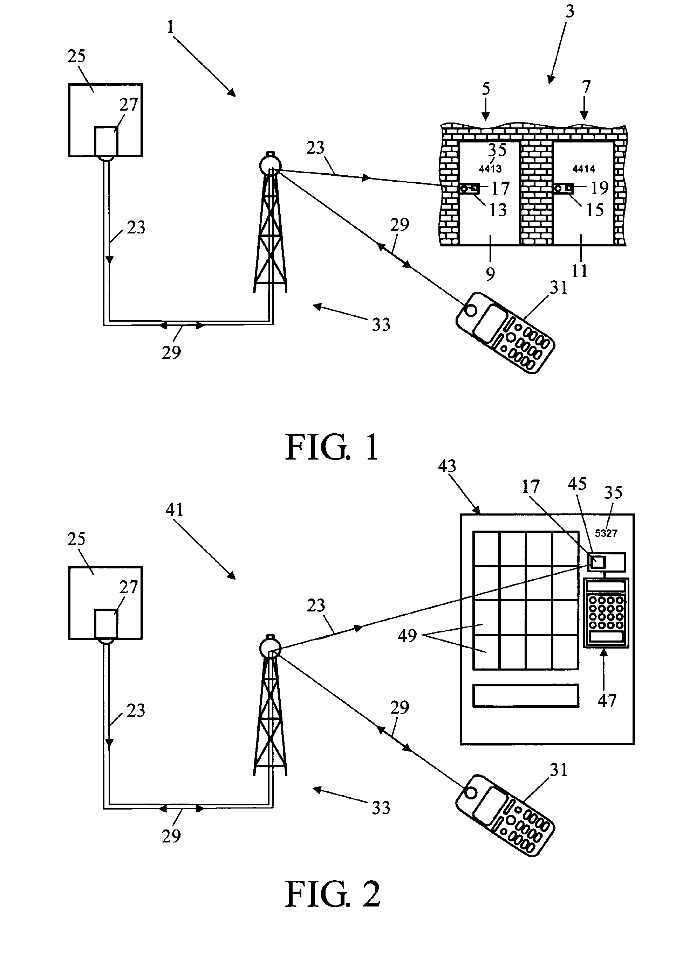

In figure 1 a first embodiment of a system 1 is shown in which the method according to the invention is used for unlocking a door of a public toilet 3. The public toilet 3 is situated, for example, in a railway station and has several toilets 5, 7 which users can make use of at a charge. The doors 9, 11 of the toilets are locked and can be unlocked by the units 13, 15 installed on them. The units are equipped with receivers 17, 19 that can receive GSM signals and are provided with relays that can unlock the doors. After receiving a specific signal 23 the units 13, 15 open the locks after which a user can open the door.

This specific signal 23 is sent by a control unit 25, which is provided with a receiver and a sender 27 of GSM signals. The control unit 25 sends the specific control signal 23 to the unit after receiving a request signal 29.

The request signal 29 comes from the user who with the help of his wireless mobile telephone 31 rings a specific 09xx pay number (for example, 0900 number, 0906 number or 0909 number) with which he is put in contact with the control unit 25 through the existing GSM network. The telephone company automatically charges the caller of this specific 09xx pay number an amount that is later paid to the owner of the public toilet.

The control unit 25 then automatically asks the caller to give a specific code 35 for the unit 13. After receiving this specific code the control unit 25 rings a telephone number corresponding to this code that is related to this unit 13. The unit 13 receives a call signal through the GSM network 33. That is a sign to the unit to open the lock. With this signal, it is not necessary for the unit 13 to connect to the control unit 25. The receiver 17, 19 verifies the call signal based on a pre-programmed approved key, in the form of a code, sent along by the control unit 25 as identification. This works in the same way as with caller ID, but now another code (identification code) can be sent instead of a telephone number. The receiver 17, 19 switches only a relay in the unit 13 when it receives a call with the correct identification code. This is to prevent fraud, so that an unauthorised person who has managed to find out the telephone number of the receiver cannot abuse its use. This person can ring in but the relay will not switch because this person is sending an invalid identification code. The control unit lets the call signal ring a number of times and at the same time reads the identification code and then hangs up. The signal that generally speaking is given by a coin-operated machine, now comes from the receiver.

In figure 2 a second embodiment of a system 41 is shown in which the method according to the invention is applied to a snack and soft drinks vending machine 43. The system 41 works the same as the system 1 described above, only the unit 45 is now not situated on a toilet door but in a snack and soft drinks vending machine 43. All parts of the system 41 that are the same as those of the system shown in figure 1 are indicated by the same reference number. In this embodiment, the unit 45 does not operate any locks, but releases an actuating unit 47 of the vending machine with which articles can be taken out of the machine.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Method for operating a unit at a charge (13; 45) comprising:
- receiving a wireless request signal (29) through a specific pay number, in which the sender of the request signal is automatically charged an amount through a telephone company by means of the telephone bill or by transferring a prepaid telephone credit, which amount is paid afterwards to the owner of the unit,
- sending a wireless message to the sender requesting that an identification code (35) be given that is unique to the unit (13; 45),
- receiving the identification code (35) sent wirelessly by the sender, and
- sending wirelessly a control signal (23) related to this identification code to the unit (13; 45).

2. Method according to claim 1, **characterised in that** receiving a request signal (29), sending a message and sending a control signal (23) take place in accordance with the GSM standard and through the existing GSM network (33).
